(19) Europäisches Patentamt
European Patent Office
Office européen des brevets

(11) **EP 1 906 213 A1**

(12) **EUROPEAN PATENT APPLICATION**

(43) Date of publication:
**02.04.2008 Bulletin 2008/14**

(51) Int Cl.:
***G02B 3/14*** *(2006.01)*　　　***G02B 26/02*** *(2006.01)*

(21) Application number: **06301000.3**

(22) Date of filing: **29.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Varioptic**
**69007 Lyon (FR)**

(72) Inventors:
• **Maillard, Mathieu**
  **69002, Lyon (FR)**
• **Bultez, Xavier**
  **69003, Lyon (FR)**

(74) Representative: **de Beaumont, Michel**
**1bis, rue Champollion**
**38000 Grenoble (FR)**

(54) **Electrowetting device with segmented electrode**

(57)　　The invention concerns an electrowetting optical device comprising a chamber (207) comprising first and second immiscible liquids (208, 210) contacting each other at a liquid-liquid interface (212), said first liquid (208) being an insulating liquid and said second liquid (210) being a conducting liquid; a first electrode (202) insulated from said first and second liquids by an insulating layer (222); and a plurality of second electrodes (214, 216) in contact with said second liquid, wherein said second electrodes are arranged to receive independent voltages for moving different parts of said liquid-liquid interface by electrowetting.

Fig 2A

**Description**

**FIELD OF THE INVENTION**

The present invention relates to an electrowetting device and in particular to an electrowetting optical device having a segmented electrode.

**BACKGROUND OF THE INVENTION**

Electrowetting optical devices such as variable focus liquid lenses, liquid shutters and variable liquid diaphragms are known in the art. An electrowetting lens generally comprises a refractive interface between first and second immiscible liquids that is moveable by electrowetting. Figure 1 reproduces Figure 4 of European Patent Application EP1662276, and illustrates a variable focal length lens 10 according to one example of the prior art. Lens 10 comprises two transparent windows 24, 38 facing each other and parallel to one another, and delimiting, at least in part, an internal volume 15 containing two immiscible liquids 16, 18, with different optical indices, defining an optical interface A, B in the form of a meniscus where they meet. The liquids 16, 18 have substantially equal densities, and one is preferably an insulating liquid, for example comprising oil or an oily substance, and the other is preferably a conducting liquid comprising for example an aqueous solution. The windows are for example transparent plates, made of an optical transparent material, e.g. glass. Whilst planar windows are shown, these windows could be fixed lens, centred on an optical axis ($\Delta$) of the variable focus lens 10.

Lens 10 further comprises a cap 30 connected to a transparent window 38 and comprising a first cylindrical side wall 34. Lens 10 also comprises a body 17 having a symmetry of revolution about the optical axis ($\Delta$) of the lens. Body 17 is connected to transparent window 24 and comprises a second cylindrical side wall 20 of a diameter smaller than the diameter of the first cylindrical wall. Cap 30 forms a first electrode and body 17 comprises a second electrode. A gasket 50 is provided to ensure the tightness of the lens structure, positioned such that it is compressed between the first and second cylindrical side walls.

Due to the electrowetting effect, it is possible, by applying a voltage between the cap 30 and body 17, to change the curvature of the refractive interface between the first liquid 16 and the second liquid 18, for example, from an initial concave shape as shown by dashed line A, to a convex shape as shown by solid line B. Thus rays of light passing through the cell perpendicular to the windows 24, 38 in the region of the refractive interface A, B will be focused more or less depending on the voltage applied.

For more complex control of the interface between the first and second liquids, for example for the correction of aberrations and to provide other functions, it is desirable to be able to independently control different parts of the edge of the liquid-liquid interface. This would also be desirable in other electrowetting devices such as in liquid diaphragms and liquid shutters to provide more control and to be able to perform more complex functions.

A means of independently controlling different parts of the edge of the liquid-liquid interface of a lens has been proposed that involves a liquid lens having a segmented lower electrode, separated from the edge of a liquid-liquid interface by an insulating layer. Independent voltages may be applied to different segments of the electrode. For example, a liquid lens having multiple lower electrodes is described in US Patent Application No. 6538823. Such a solution however has the disadvantage that the liquid-liquid interface tends to be deformed close to the edges of the electrode segments, for example due to the a voltage difference between adjacent segments of the electrode. Such distortion is generally very undesirable in optical devices as this leads to poor image quality. In order to reduce this distortion, a high number of electrodes can be provided thereby reducing the voltage step between adjacent electrodes, however this has the disadvantage of adding to the complexity of the variable lens, and some distortion invariably still remains.

**SUMMARY OF THE INVENTION**

One aim of the present invention is to provide an optical device and a method of controlling the same that at least partially address the above mentioned disadvantages of the prior art.

According to a first aspect of the present invention, there is provided an electrowetting optical device comprising a chamber comprising first and second immiscible liquids contacting each other at a liquid-liquid interface, the first liquid being an insulating liquid and the second liquid being a conducting liquid; a first electrode insulated from the first and second liquids by an insulating layer; and a plurality of second electrodes in contact with said second liquid, wherein said second electrodes are arranged to receive independent voltages for moving different parts of an edge of the liquid-liquid interface by electrowetting.

According to a further aspect of the present invention, there is provided an optical apparatus comprising an image sensor for capturing an image; a lens arrangement arranged to form an image on the image sensor, the lens arrangement comprising the above optical device; and driving circuitry for generating voltage signals to be applied between the first electrode and each of the plurality of second electrodes.

According to an embodiment of the present invention the driving circuitry is arranged to generate a first voltage of a first voltage level to be applied to a first of the second electrodes, and to generate a second voltage of a second voltage level to be applied to a second one of the second electrodes.

According to yet a further aspect of the present invention, there is provided a method of controlling a liquid lens comprising first and second immiscible liquids, the first liquid being an insulating liquid and the second liquid being a conducting liquid, said first and second liquids contacting each other to form a liquid-liquid interface, the method comprising applying a first voltage signal between a first electrode insulated from the first and second liquids by an insulating layer and one of a plurality of second electrodes in contact with the conductive liquid, a part of the edge of the liquid-liquid interface being moved by electrowetting by the applied first voltage.

## BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:

Figure 1 (described above) is a cross-section view of a liquid lens according to the prior art;
Figure 2A is a cross-section view of a liquid lens according to a first embodiment of the present invention;
Figure 2B is a plan view of the embodiment of Figure 2A;
Figure 3 is a cross-section schematic view illustrating the effect of tilt in embodiments of the present invention;
Figures 4 to 7 are plan views of liquid lenses according to further embodiments of the present invention;
Figures 8 and 9 are cross-section views of liquid lenses according to further embodiments of the present invention;
Figure 10 is a plan view of a liquid lens according to a further embodiment of the present invention;
Figure 11 is a plan view of alternative electrodes that can be incorporated in embodiments of the present invention;
Figure 12 is a cross-section view of another alternative electrode that can be incorporated in embodiments of the present invention;
Figure 13 is a cross-section view of a variable liquid diaphragm according to an embodiment of the present invention;
Figure 14 is a plan view of an alternative arrangement of conducting segments according to embodiments of the present invention; and
Figure 15 is a schematic illustration of an optical apparatus according to an embodiment of the present invention.

## DETAILED DESCRIPTION OF THE INVENTION

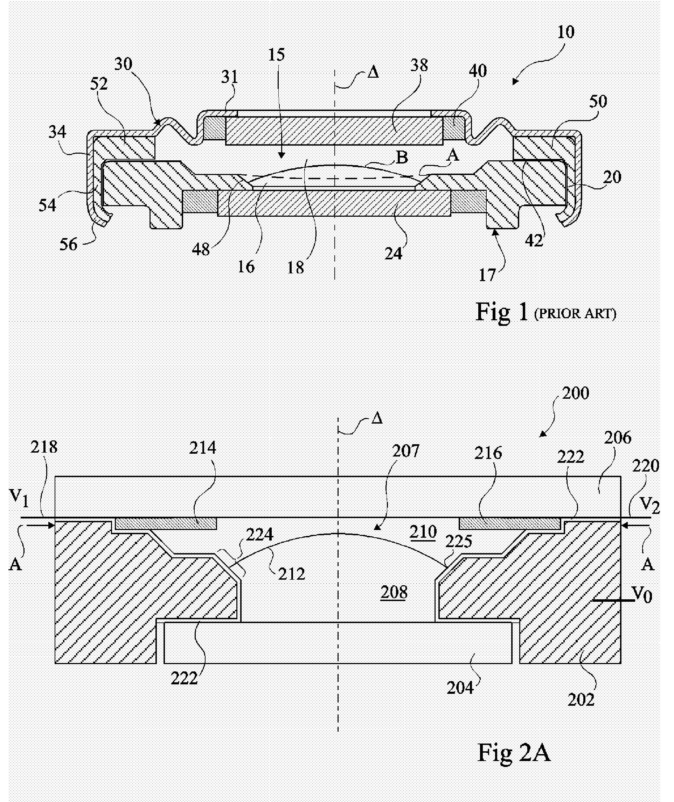

Figure 2A is a cross-section view of a liquid lens 200 according to a first embodiment. Liquid lens 200 comprises a base portion 202 which in this example forms an annular lower electrode of the lens. Transparent windows 204, 206 are provided fixed to upper and lower surfaces of the base portion 202, in this example windows 204, 206 being formed of glass planar plates. In alternative embodiments these windows can be formed of fixed lenses. The windows 204, 206 and base portion 202 together define an inner chamber 207 of the lens containing two immiscible liquids 208, 210, which meet at a refractive liquid-liquid interface 212 of the lens. Liquid 208 in this example is an insulating liquid, and is for example an oily liquid comprising oil mixed with other substances. Liquid 210 is a conductive liquid, and in this example has a relatively low conductivity, for example in the range of 0,5 to 300 $\mu$S/cm, and preferably equal to less than 30 $\mu$S/cm. In alternative embodiments the conducting liquid could have a higher conductivity of between 300 and 100,000 $\mu$S/cm. The conducting liquid for example comprises water mixed with traces of a salt, such as $Na_2SO_4$. Alternatively, a conducting liquid having approximately 20 $\mu$S/cm conductivity can for example be achieved by a mixture of slightly less than 37.5 percent weight of water, 25 percent weight of Ethylene glycol, 37.5 percent weight of 1, 2, 3 propanetriol and 0.0001 percent weight of NaBr.

According to the present embodiment, two upper electrodes 214, 216 are provided, each contacting with conducting liquid 210 in the inner chamber 207. A conductive track 218 is connected to electrode 214 extending to the outside edge of lens 200 such that a voltage V1 can be applied between base portion 202 and electrode 214. A conductive track 220 is connected to electrode 216 also extending to the outside edge of lens 200 such that a voltage V2 can be applied between base portion 202 and electrode 216. The base portion 202 is connected to a voltage $V_0$, which is for example a ground voltage. Surfaces of base portion 202 are covered by an insulating layer 222, insulating the base portion from electrical contact with the liquids 210, 208, and the electrodes 214, 216.

The terms "upper electrodes" is used throughout the present specification to designate electrodes in contact with the conducting liquid, while the term "lower electrode" is used to designate the electrode insulated from the liquids by an insulating layer. It will be apparent that given alternative orientations or arrangements, the upper electrodes could be positioned below the lower electrode.

As with the liquid lens 10 of Figure 1, base portion 202 is annular in shape, having a central opening, and the liquid-liquid interface 212 is arranged to traverse this opening. At the edge of the opening the base portion 202 comprises a bevelled surface 224 which is rotationally symmetrical to an optical axis Δ of the lens and which in this example is circular and in contact with the edge 225 of refractive interface 212 between liquids 208, 210. The term "optical axis Δ" is used throughout the present specification to designate an axis passing through the centre of the refractive interface 212 when the refractive interface has a rotationally symmetric curvature, the optical axis Δ passing through a point in the refractive interface 212 of neutral refraction, in other words where no angular refraction occurs.

In this embodiment, window 206 is glued or otherwise fixed directly to a top surface of base portion 202, while window 204 is glued or otherwise fixed in a recessed groove provide in the bottom surface of base portion 202. Although not shown in Figure 2A, lens 200 can further comprise one or more expansion chambers for compensating for expansion of liquids 208, 210. Expansion chambers are discussed on more detail in copending European Patent Application No. EP 06115595, which is hereby incorporated by reference to the extent allowable by the law.

In operation, independent voltages can be applied between the base portion 202 and each of the two electrodes 214, 216, and thus the liquid-liquid interface 212 can be controlled in a variety of ways. The applied voltage is preferably an oscillating (AC) voltage at a particular frequency. Due to the low conductivity and/or the frequency of the voltage applied to each electrode, the voltage signal is attenuated in the conductive liquid 210, and therefore has a localised effect on the edge 225 of the refractive interface, allowing each side of the interface 212 to be controlled independently. In particular, tilt or astigmatism can be applied to the refractive interface 212, tilt involving rotating the optical axis Δ of the lens by a number of degrees in one direction, and astigmatism meaning that two different cross-sections of the interface taken in perpendicular planes each passing through the optical axis have different curvature radii, in other words the curves of the interface at these cross-sections are not identical as they would be if the interface were perfectly spherical. Examples of surfaces providing astigmatism are interfaces having cylindrical forms or ellipsoidal forms.

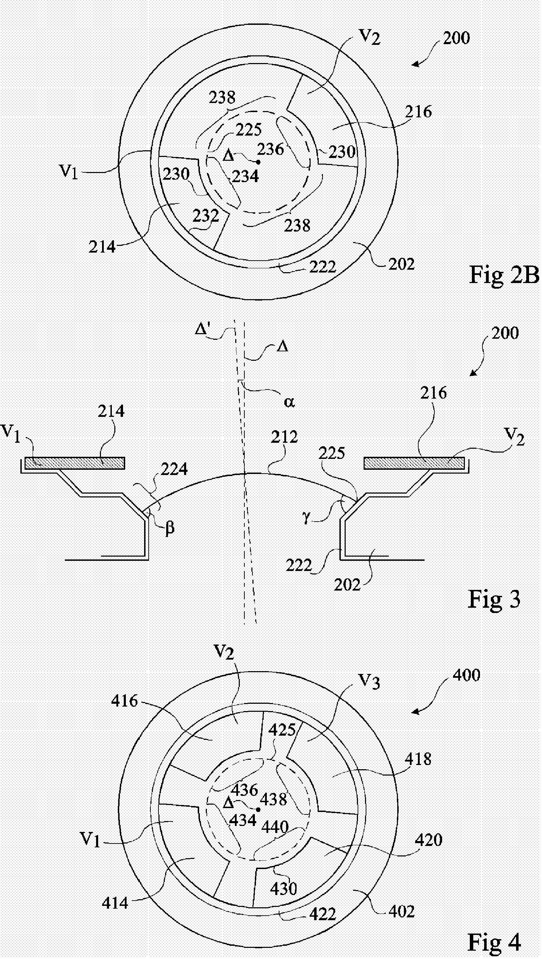

Figure 2B illustrates a plan view of a horizontal cross-section through the liquid lens 200 of Figure 2A, the cross section passing through electrodes 214, 216. As shown, in this embodiment electrodes 214, 216 are each formed as segments of a common annular disc, each having an inner edge 230 and an outer edge 232 at the same distance from the optical axis Δ of the lens. Electrodes 214, 216 are of identical size and shape. Each electrode 214, 216 extends approximately 70 degrees around the lens, and they are evenly spaced such that two gaps each of approximately 110 degrees are provided between each electrode 214, 216. As shown in Figure 2B, the outer edges of electrodes 214, 216 are insulated from base portion 202 by insulating layer 222.

A dashed line has been superimposed on the plan view of Figure 2B to illustrate an example of the positioning of the edge 225 of the liquid-liquid interface 212. Regions of the edge 225 adjacent to electrodes 214, 216 have been labelled 234, 236 respectively. Regions adjacent to the gaps between electrodes 214, 216 have also been labelled 238.

As explained above, when independent voltages V1, V2 are applied between base portion 202 and electrodes 214, 216 respectively, independent control of two parts of the edge 225 of the refractive interface 212 can be achieved. Each electrode is for example provided with an AC voltage of between 0 and 120 V RMS, at a frequency for example of 1 kHz. Conductive liquid 210 being of relatively low conductivity, in the example the edge 225 of interface 212 adjacent to electrode 214, labelled 234 in Figure 2B is controlled by voltage V1 independently of the edge 225 of interface 212 adjacent to electrode 216, labelled 236 in Figure 2B which is controlled by voltage V2. The edge 225 of interface 212 adjacent to the gaps between electrodes 214, 216, labelled 238 in Figure 2B, are controlled by a combination of the voltages V1 and V2.

The effective voltage (Vc) applied to regions 234, 236 and 238, which provides the electrowetting modification of position of the edge 225 of interface 212 and thus also the contact angle between interface 212 and surface 224, can be approximated, based on the Millman equation for an RC circuit connected ground as follows:

$$Vc = V/\sqrt{(1 + d^2\omega^2Cs^2/s^2)}$$

where V is the voltage V1 or V2 applied between electrode 214 or 216 and base portion 202, d is the distance from electrode 214 or 216, $\omega$ is equal to $2\pi f$, where f is the frequency of voltage V, Cs is the capacitance per unit area of the insulating layer, and s is conductivity of the conductive liquid 210. In the present case we are interested in the distance d being the distance between the electrodes 214 or 216 and points on the edge 225 of the interface 212. It can be shown by this formula that the lower the conductivity of the conductive liquid 210, the faster the voltage Vc falls in relation to the distance d from the electrodes 214 or 216. Thus the electrodes 214, 216 can be positioned and the conductivity of conductive liquid 210 can be chosen such that a large proportion of the voltage V1 applied to electrode 214 is present at the edge 225 of interface 212 in region 234, whereas a relatively small proportion of voltage V1 is present at the edge 225 of interface 212 in region 236.

As an example, assuming that liquid 210 has a conductivity s of 1 μS/cm, voltage V between electrode 214 and base portion 202 is equal to 75 V RMS, the frequency f of voltage V1 is 1 kHz, the capacitance Cs of surface 224 is 5.5 pF/mm$^2$ , and the inner edge 230 of electrode 214 is spaced by 2 mm from edge 225 in region 234, and by a minimum of 15 mm from edge 225 in region 236, then the effective voltage in region 234 resulting from electrode 214 can be shown to be approximately 51 V RMS, whereas the effective maximum voltage in region 236 resulting from electrode 214 (at the point closest to electrode 214) can be shown to be only approximately 17 V RMS. The voltage in regions 238 of edge 225 resulting from electrode 214 in this example will vary between 51 and 17 V RMS depending on its distance from electrode 214, and assuming that 0 Volts is applied between electrode 216 and the base portion.

The size of electrodes 214, 216, and in particular the spacing between these electrodes is preferably chosen such that they are not so close as to be electrically coupled to one another. In other words, the spacing is preferably chosen such that the voltage at one of the electrodes does not influence the voltage on the other electrode. The minimum spacing between electrodes to avoid unwanted electrical coupling will depend on the conductivity of the conducting liquid 210 and the voltage frequency. Furthermore, smaller electrodes have the advantage of causing smoother field gradients, thereby minimizing distortion at the edges of the refractive interface 212. In some situations larger electrodes are advantageous however as they result in a more homogeneous voltage in the region of the refractive interface beneath them.

Figure 3 is a cross-section schematic view of part of liquid lens 200 illustrating how tilt can be achieved by application of different voltages V1 and V2. The base portion 202, insulating layer 222 covering the base portion 202, electrodes 214, 216, liquid-liquid interface 212 and bevelled surface 224 of base portion 202 with which the edge 225 of interface 212 contacts are illustrated. The example is shown in which voltage V1 applied to electrode 214 is higher than voltage V2 applied to electrode 216. As illustrated, due to the electrowetting effect, the higher voltage provided to electrode 214 causes a larger displacement of edge 225 close to electrode 214 than the displacement of edge 225 close to electrode 216. This results in the refractive interface 212 being tilted, such that whereas the normal optical axis $\Delta$ of the refractive surface 212 extends through a central axis of the lens perpendicularly to windows 204, 206, the new optical axis $\Delta'$ of the titled refractive surface 212 is inclined by an angle $\alpha$ to the normal optical axis $\Delta$. Angle $\alpha$ is for example controllable in a range from 0 to 30 degrees by the difference between V1 and V2. Angle $\alpha$ for a given cross-section of the lens can be determined approximately as half the difference in contact angle between the edge 225 of the refractive interface 212 with surface 224 at each side of the lens. Taking the example of Figure 3, assuming a contact angle $\beta$ between the edge 225 of interface 212 and surface 224 in the region of electrode 214, and a contact angle $\gamma$ between the edge 225 of the interface 212 and surface 224 in the region of electrode 216, angle $\alpha$ can be determined as approximately equal to $(\beta - \gamma)/2$. This represents the geometric tilt of the refractive interface. The effective optical tilt can be approximately determined as:

$$\texttt{Optical tilt = Geometric tilt.} \Delta \texttt{n/n(oil)}$$

wherein $\Delta$n is the refractive index of insulating liquid 208 minus that of the conducting liquid 208, and n(oil) is the refractive interface of the insulating liquid.

According to embodiments described herein, the angle of tilt is controllable at the same time as the power of the lens, in other words the extent of curvature of the refractive surface 212. In particular, the power of the lens is determined based on the average of voltages V1 and V2, whereas tilt is determined according to the difference between V1 and V2.

The frequency f of voltages V1 and V2 also has an influence on the effective voltage at surface 224. In particular, the higher the frequency, the faster the effective voltage drops with distance from electrodes 214, 216. In the above example of operation, V1 and V2 both have frequencies of approximately 1 kHz. However, in alternative examples the frequency is increased for one of the electrodes, to a value of 20 kHz for example, thus decreasing the effect of the voltage applied to this electrode. In this embodiment, the lens power and tilt can be controlled individually by a voltage of a first frequency applied to one of the electrodes 214, 216 and a voltage of a second frequency applied to the other of the electrodes 214, 216. One of the voltages can be applied at a sufficiently low frequency that it has very low attenuation difference in the conducting liquid 210, such that it reaches all the surface area 224 at approximately the same voltage level. This low frequency voltage is thus used to control the power of the lens. At the same time, a higher frequency voltage signal can be applied to the other electrode to apply a localised voltage to one side of the edge 225 of the refractive interface 212, for example in region 234 or 236. This voltage is used to control tilt.

The voltages applied to the electrodes in the embodiments described herein preferably have frequencies in the range 500 Hz to 200 kHz.

As an example, assuming a conductive liquid 210 having a conductivity of 10 $\mu$S/cm, a first voltage V1 applied between electrode 214 and base portion 202 has a frequency of 1 KHz and RMS voltage of 75 V, a second voltage V2 applied between electrode 216 and the base portion 202 has a frequency of 20 kHz and an RMS voltage of 100 V, the capacitance Cs of surface 224 is 5.5 pF/mm$^2$, and the inner edge 230 of electrodes 214, 216 are spaced by 2 mm from edge 225 in regions 234, 236, and by a minimum of 15 mm from edge 225 in region 236, then the effective voltage in region 234 resulting from V1 applied to electrode 214 can be shown to be approximately 75 V RMS, while the effective voltage in region 236 resulting from V1 (at the point closest to electrode 214) can be shown to be approximately 68 V RMS, thus showing only a small reduction. On the other hand, effective voltage in region 236 resulting from V2 can be shown to be approximately 90 V RMS, while the effective voltage in region 234 resulting from V2 can be shown to be only approximately 16 V. Thus both regions 234, 236 will receive an RMS voltage of at least 68 V RMS, providing the lens power, while region 236 further receives a voltage of 90 V providing tilt to the lens. The voltage in regions 238 of edge 225 resulting from V1 and V2 in this example will vary between 68 and 90 V RMS depending on its distance from these electrodes.

A high frequency signal can also be used to provide astigmatism in the embodiment of Figures 2A and 2B. In particular, assuming that a 30 kHz RMS voltage of for example 100 V RMS is applied to both electrodes at the same time, the edge 225 displacement and thus the contact angles between edge 225 and interface 212 in regions 234, 236 will be very high. On the other hand, due to the high frequency signal, high attenuation of the signals will occur away from electrodes 214, 216, and thus in regions 238 where no electrode is provided, the voltage applied to edge 225 will be very low. This will result in a curved form of interface 212 similar to the side surface of a cylinder, the peak of the curve extending between the centre of region 234, through the optical axis Δ, to the centre of region 236. If the voltage applied to the electrodes 214, 216 are different, tilt can also be provided at the same time. It should be noted that when high frequency voltages are applied to one of the electrodes, attenuation of this voltage can be high even if the conducting liquid has relatively high conductivity.

The same principles described above in relation to the embodiment of Figures 2A, 2B and 3 also apply to the embodiments that will now be described below.

Figure 4 is a plan view of a horizontal cross-section of a liquid lens 400 according a further embodiment, liquid lens 400 comprising a base portion 402, which is the same as base portion 202, covered by an insulating layer 404. Although not shown in Figure 4, liquid lens 400 also comprises the same liquids forming a liquid-liquid interface, and an edge 425 of interface 412 meeting a surface 424 of base portion 402 equivalent to edge 225. The conducting liquid for example has low conductivity, of for example between 0,5 and 30 μS/cm. The structure of lens 400 is very similar to that of lens 200, except that rather than comprising two upper electrodes, the embodiment of Figure 4 comprises four upper electrodes, shown labelled 414, 416, 418 and 420. Electrodes 414 to 420 are arranged evenly spaced around the lens, and as with electrodes 214, 216, they are segments from a common annular disc, each electrode having a curved inner edge 430 and a curved outer edge 432. Each electrode extends approximately 60 degrees around the lens, and is separated from the next by approximately 30 degrees. Each electrode is connected in a similar fashion to those of Figure 2A, such that independent voltages V1, V2, V3 and V4 can be applied to respective electrodes 414 to 420.

A dashed line 425 has been superimposed in Figure 4 representing the positioning, viewed from above, of the edge 425 of the refractive interface. Four regions 434, 436, 438 and 440 around line 425 have been labelled showing the areas adjacent to respective ones of the electrodes 414 to 420.

In operation, voltages V1 to V4 are applied to each of the electrodes 414 to 420, these voltages being AC voltages in the range of 0 to 120 V RMS. By providing four electrodes, the refractive interface can be controlled in more complex ways. By applying a higher voltage to two adjacent electrodes of the four electrodes, the interface can be tilted. Alternatively, tilt can be achieved by applying a higher voltage to a first one of the electrodes, for example to electrode 414, applying a lower voltage to the two adjacent electrodes to the first electrode, for example to electrode 416 and 420, and applying an even lower voltage to the electrode opposite the first electrode, for example electrode 418. Tilt can be provided towards any of the four electrodes.

Astigmatism can be added to the refractive interface by applying a higher voltage to two of the electrodes facing each other, for example electrodes 414 and 418, and a lower voltage to the other two facing electrodes, for example electrodes 416, 420. Thus astigmatism can be applied to form a refractive interface having a ridge between electrodes 414 and 418, or between electrodes 416 and 420.

Furthermore, particular combinations of voltages can be applied to the electrodes such that both tilt and astigmatism can be provided at the same time as controlling the lens power. Again, by applying voltages of different frequencies, the voltage applied to one or more of the electrodes can be made to have a more localised effect, while the voltage applied to other electrodes can have a more general effect on the edge 425 of the refractive interface.

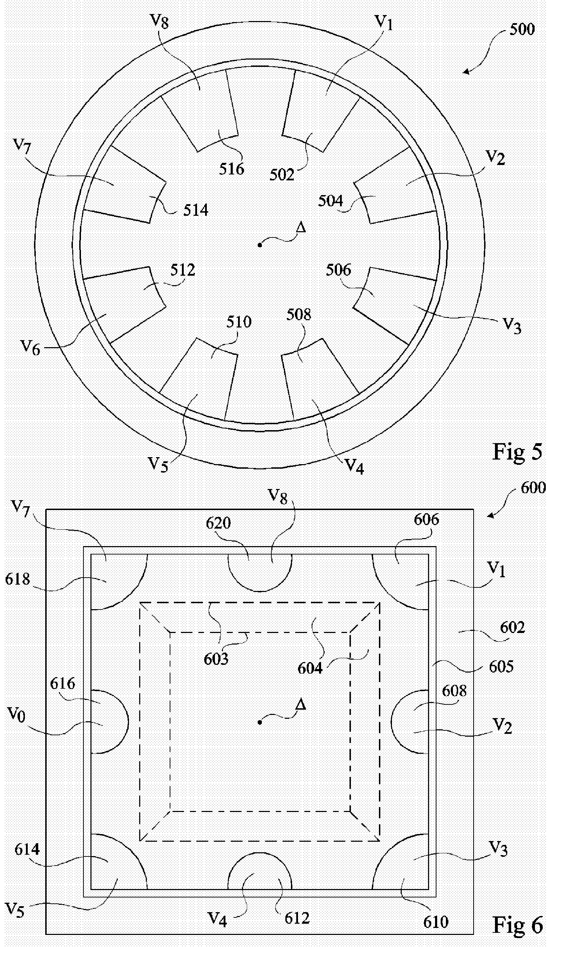

Figure 5 illustrates yet a further embodiment of a liquid lens 500, showing the same view as that of Figure 4, in which eight upper electrodes 502, 504, 506, 508, 510, 512, 514 and 516 are provided in contact with the conductive liquid of low conductivity. Again the liquids and the structure of the lens, except for the number of electrodes, are the same as that shown in Figures 2A and 4, and will not be described again in detail. Electrodes 502 to 516 are segments of an annular disc, each extending approximately 30 degrees and being separated from the next by approximately 20 degrees. By providing more electrodes, more fine control of the refractive interface between the liquids can be achieved. In particular, voltage levels V1 to V8 applied to respective electrodes 502 to 516, and their respective frequencies can be applied to give the required form of the refractive interface, with more control being possible compared to the embodiments having fewer electrodes.

In some situations, a liquid lens could be used in which the base portion is not circular. According to embodiments of the invention, it is possible to correct, at least partially, the aberrations that result from a non-circular base portion.

For example, Figure 6 is a cross-section view of an embodiment of a liquid lens 600 having a base portion 602 that has a square shape, with a square opening allowing light to pass through the lens. Dashed lines 603 show the form of a number of bevelled surfaces 604 for receiving the edge of the liquid-liquid interface. These surfaces replace edge 225 of Figure 2A, and in this example four bevelled surfaces 604 are provided inclined with respect to the optical axis Δ of the lens, these surfaces being planar surfaces meeting each other at their edges. Again, base portion 602, including surfaces 604, is covered by an insulating layer 605, insulating it from the liquids.

In this embodiment, eight electrodes 606, 608, 610, 612, 614, 616, 618 and 620 are provided which allow aberrations caused by the square shape to be corrected. In particular, electrodes 606, 610, 614 and 618 are provided close to the corners of the square lens, and in particular close to the corners of surfaces 604, and electrodes 608, 612, 616 and 620 are provided halfway along each side of the square lens, close to the midpoint along the length of each of the surfaces 604. In this way, when the liquid-liquid interface is convex, by applying higher voltages at the corner electrodes 606, 610, 614 and 618 and lower voltages at the side electrodes 608, 612, 616 and 620, the refractive interface can be controlled to have a more spherical form, thereby correcting aberrations caused by the square shape. When liquid-liquid interface is concave, corner electrodes 606, 610, 614 and 618 can be controlled with a lower voltage than side electrodes 608, 612, 616 and 620, to provide a more spherical interface. Furthermore, variable focus, tilt and astigmatism can also be applied by control of the voltages to each electrode.

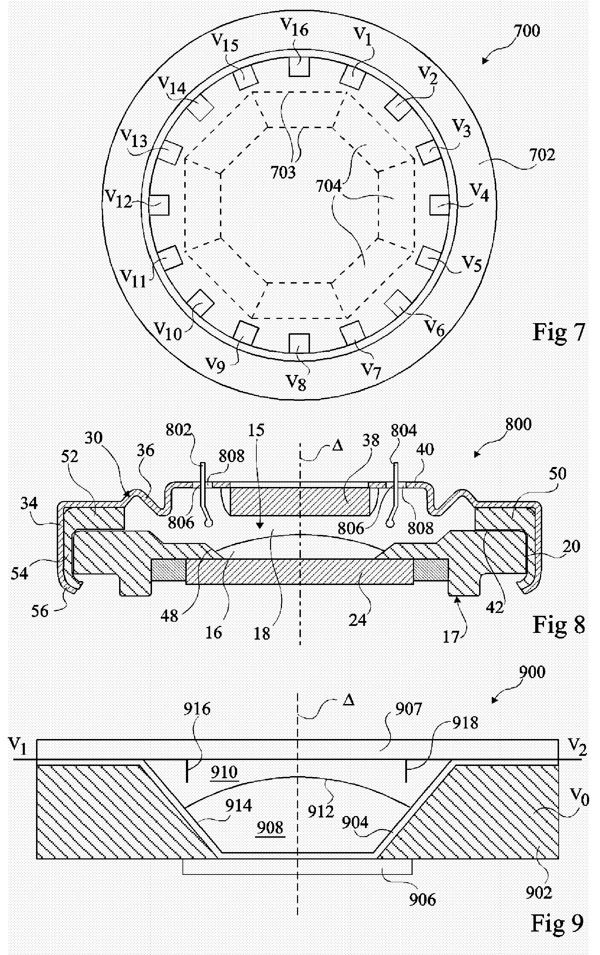

Figure 7 is a plan view of a cross-section showing an embodiment of an octagonal liquid lens 700, which, as shown by dashed lines 703, has a base portion 702 comprising bevelled surfaces 704 for receiving the edges of the liquid-liquid interface that are joined to form an octagonal shape. Sixteen electrodes are provided around the edge of the surfaces 704 for compensating for aberrations caused by the octagonal shape of the lens, again these electrodes being provided at the vertices of the octagonal lens, and half way along each side of the octagonal lens. As with the square lens, variable focus, tilt and astigmatism can also be applied by control of the voltages to each electrode.

Figure 8 is a cross-section view showing a liquid lens 800 which is the same as liquid lens 10 described above in relation to Figure 1, but with a number of additional upper electrodes, two of which are illustrated labelled 802, 804 respectivity. Electrodes 802, 804 in this embodiment are formed as wire rods entering the cap 36 of the lens through holes 806 which are lined with an insulating layer 808 to prevent contact with the metal cap 36. Each wire rod 802, 804 extends into the lens to a point close to the edge of the liquid-liquid interface of the lens.

Figure 9 illustrates a further embodiment of a liquid lens 900 having a base portion 902 having an annular shape and forming a lower electrode of the lens. Base portion 902 is covered by an insulating layer 904. Two windows 906, 907 are provided glued of fixed to the top and bottom surfaces of the base portion 902. An insulating liquid 908 and a low conductivity liquid 910 are provided, these liquids being the same as described above, the liquids forming a refractive interface 912 where they meet. The edge 913 of the refractive interface 912 contacts the inner surface of the annular base portion 902, which in this example is a surface 914 inclined with respect to the optical axis Δ of the lens. A plurality of upper electrodes are provided, two being shown in Figure 9 labelled 916, 918. Electrodes 916, 918 are formed in this example as metal tracks printed or glued onto the underside of top window 907 of the device and extending from the top window 907, within the low conductivity liquid 910, to a point close to the edges of refractive interface 912.

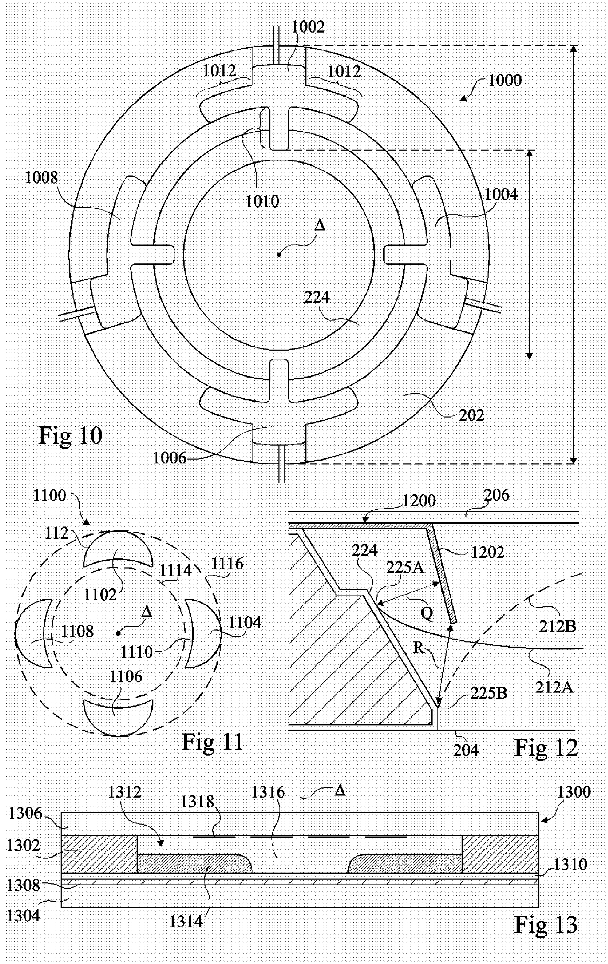

Figure 10 is a plan view of a liquid lens 1000 according to a further embodiment of the present invention. Liquid lens 1000 comprises many of the same features as lens 200 described above in relation to Figures 2A and 2B, and those parts in common have been labelled with the same reference numerals. Lens 1000 comprises four electrodes 1002, 1004, 1006 and 1008 in contact with the conducting liquid of the lens. These electrodes 1002 to 1008 are for example formed as surface coatings of metal on the underside of window 206, which is not shown in Figure 10, but which is the same as window 206 of Figure 2A. Each electrode for example has a thickness in the range of 0.05 mm to 0.5 mm.

The liquid lens 1000 of Figure 10 has been tested by applying a 5 kHz voltage to one of the electrodes of up to 80 V peak-to-peak and shown to provide a variable tilt of up to 8.2 mrad, at the same time as a focus variable between -7 and -3 dioptres. When 5 kHz voltages between 0 and 80 V peak-to-peak where applied, tilt of up to 16 mrad was achieved, at the same time as a focus variable between -7 and 1 dioptres.

In this particular example, a special shape has been given to the electrodes 1002 to 1008 to ensure a symmetrical design of the parts of the electrode in contact with the conducting liquid, whatever the positioning of the conducting paths for the electrical connection of the electrodes. In plan view each electrode 1002 to 1008 has a form having a protruding portion, as labelled 1010 in Figure 10, that extends towards the optical axis Δ of the lens 1000, adjacent to the bevelled surface 224 of base portion 202 that contacts the edge of the liquid-liquid interface of the lens. Portion 1010 is for example between 0,5 and 2 mm in width, and extends between 1 and 3 mm towards the centre of the lens. The spacing between the ends of opposite portions 1010 is for example between 5 and 20 mm, while the whole lens is for example between 20 and 40 mm in diameter. Each electrode 1002 to 1008 further comprises wing portions as shown labelled 1012 which are substantially perpendicular to portion 1010 and extent around the lens, sandwiched between window 206 and base portion 202. Furthermore, each electrode 1002 to 1008 comprises a contact portion extending away from the optical axis $\Delta$ of the lens towards the outside edge of the lens 1000, either adjacent to portion 1010 in the case of electrodes 1002 and 1006, or from the radially outer edge of one of the wings 1012 in the case of electrodes 1004 and 1008, these contact portions allowing electrical contact to be made with each electrode 1002 to 1008.

Figure 11 is a plan view illustrating alternative electrodes 1102, 1104, 1106 and 1108 which can replace electrodes 1002 to 1008 in the embodiment of Figure 10. Electrodes 1102 to 1108 are again formed of a metal plating on the underside of window 206, but in this example they are crescent shaped, such that a front edge 1110 of each electrode closest to the optical axis $\Delta$ of each lens is less curved than the back edge 1112 of each electrode furthest from the optical axis $\Delta$. Thus the surface area of the electrode is greatest closer to the optical axis $\Delta$ and gets smaller radially outwards from the optical axis $\Delta$. This design has the advantage that it allows some compensation for the change in separation between the edge 225 of the liquid-liquid interface and each electrode as edge 225 moves. Dashed line 1114 gives an indication of the superimposed positioning of interface 225 with respect to the electrodes when the interface is at its inner-most position, while dashed line 1116 gives an indication of the superimposed positioning of interface 225 in an outer-most position. Given that the electrodes 1102 to 1108 are arranged in a flat plane perpendicular to the optical axis $\Delta$, and that the edge contacts bevelled surface 224, as the edge 225 is move radially outwards from line 1114 to line 1116, it also moves closer to one or more of electrodes 1102 to 1108, and therefore the apparent voltage would normally increase. This however is compensated to some extent by providing these electrodes having smaller surface area radially outwards from optical axis $\Delta$.

Figure 12 is a cross-section view illustrating an alternative electrode 1200 having a portion 1202 extending from the surface of window 206 towards the lower window 204, finishing at a point close to the liquid-liquid interface 212. This electrode is arranged such that the change in distance between the edge 225 of the liquid-liquid interface and the electrode 1200 as edge 225 moves is minimised. As illustrated, when interface 212 is in a first position shown by solid line 212A, its edge labelled 225A is for example at its radially outer limit and is at a distance Q from the closest point on electrode 1200. However, when interface 212 is at the position shown by dashed line 212B, edge 225 is for example at its radially inner limit as shown labelled 225B, and is at a distance R from the end point of electrode 1200. Due to the incline of portion 1202 of electrode 1200, which is slightly steeper than the incline of bevelled edge 224, the distances of Q and R are substantially equal.

Figure 13 illustrates an embodiment of a variable liquid diaphragm 1300. Diaphragm 1300 comprises an annular portion 1302 sandwiched between lower and upper windows 1304, 1306, the lower window 1304 being covered by a transparent conducting layer 1308, and a further insulating layer 1310 covering layer 1308. A liquid chamber 1312 between the lower and upper windows 1304, 1306 contains a first opaque insulating liquid 1314, for example comprising oil mixed with black pigment, and a conducting liquid 1316. Conducting liquid 1316 for example has low conductivity of between 0.5 and 300 $\mu$S/cm. A grid of electrodes 1318 is provided as a transparent coating of conducting material applied to the inner surface of window 1306 and contacting with the conducting liquid 1316, four such electrodes being shown in Figure 13. Each electrode 1306 is for example circular or square in plan view, and can be controlled independently with a voltage, using thin conducting paths. These paths and the electrodes 1318 can for example be formed comprising indium tin oxide (ITO).

In operation, in an initial state with no voltages applied to the electrodes 1318, opaque liquid 1314 covers the whole surface of insulating layer 1310, except for a small central region of the surface which is treated to have modified properties such that the opaque liquid does not contact here. For example, this region has a higher wettability by the conducting liquid 1316 than the insulating liquid 1314. When a voltage is applied to one or more of the electrodes 1318, due to the electrowetting effect, the conducting liquid 1316 makes contact with the insulating layer 1310 in the region adjacent to these one or more electrodes. Due to the conductivity of the conductive liquid and/or the frequency of the applied voltage, the effect of the voltage is localised. This allows complex control of the opening through the diaphragm, which can have a variable diameter, and also be moved sideways in any direction perpendicular to the optical axis $\Delta$.

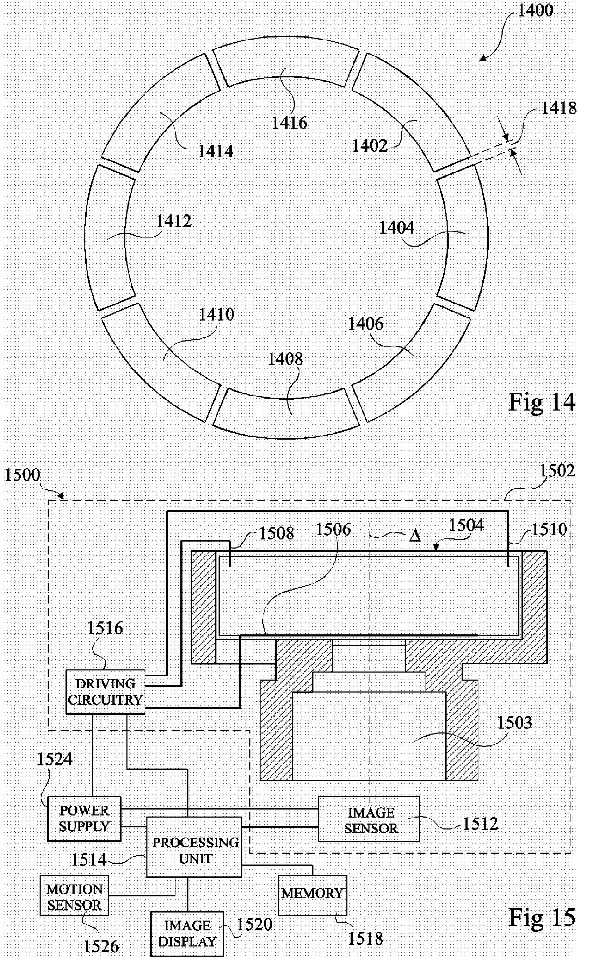

Figure 14 illustrates an electrode arrangement 1400 according to another embodiment, this electrode arrangement for example replacing electrodes 214, 216 of Figures 2A and 2B. The electrode arrangement in this case comprises a plurality of conducting segments 1402, 1404, 1406, 1408, 1410, 1412, 1414 and 1416, arranged close enough to be electrically coupled to one another, only some of them being electrically connected and forming the upper electrodes of the device.

Generally, in the previous embodiments described above, the upper electrodes have been spaced far enough apart to avoid unwanted coupling between the electrodes, unwanted coupling meaning that the voltage at one electrode interferes with the voltage applied to an adjacent electrode.

In the embodiment of Figure 14, conducting segments 1402 to 1416 are segments of an annular ring, each conducting segment being separated from the next by a narrow distance shown labelled 1418. A voltage is for example applied to only two of the conducting segments 1402 to 1416, which thus form the upper electrodes of the device, while the remaining conducting segments receive a voltage from adjacent electrodes and/or adjacent non-connected conducting segments. For example, it is assumed that an oscillating voltage of 60 V peak-to-peak is applied to electrode 1402, electrode 1410 is connected to ground, and the other conducting segments 1404, 1406, 1408, 1412, 1414 and 1414 are electrically isolated, only being in contact with the conducting liquid 210 and the glass window 206, which is not a good conductor. The ring of conducting segments can therefore be considered as conducting tracks separated by the resistances caused by the liquid 210 filling the gaps between the conducting segments. Given that the gaps between the conducting segments are all the same size, the voltage difference between the voltage at electrode 1402 and electrode 1410 will drop in equal steps at each of the intermediate conducting segments, resulting in a voltage at conducting segments 1404 and 1416 of approximately 45 V, a voltage at conducting segments 1406 and 1414 of approximately 30 V, and a voltage at conducting segments 1408 and 1412 of approximately 15 V.

The advantage of this arrangement is that different voltages can thereby be obtained at each of the conducting segments without the necessity of generating the same number of voltage levels as the number of conducting segments.

It will be apparent to those skilled in the art that in alternative embodiments voltages can be applied to different combinations of the conducting segments 1402 to 1416, and for example three or four of the conducting segments 1402 to 1416 can be connected to voltage signals, the intermediate conducting segments receiving a voltage signal based on the voltage at adjacent conducting segments.

Figure 15 is a schematic view of an optical apparatus 1500 including an optical device according to embodiments of the invention, which is for example to be used in a compact digital camera, a mobile phone, etc. Optical apparatus 1500 comprises a camera module 1502 comprising a lens arrangement 1503 and an optical device 1504 according to one of the embodiments described herein. Optical device 1504 has a single lower electrode 1506 and a number of upper electrodes, two of which are shown labelled 1508 and 1510. The lens arrangement 1503 comprises a number of fixed lenses.

Driving circuitry 1516 is provided connected to electrode 1506, and to each of the upper electrodes, for example to electrodes 1508 and 1510 of the optical device 1504 shown in Figure 15. The driving circuitry 1516 generates oscillating voltage signals to each of the upper electrodes.

The driving circuitry 1516 will generally comprise one or more frequency oscillators for generating signals at one or more given frequencies. These signals can then be amplified before being provided between the lower electrode and one or more of the upper electrodes. According to some embodiments the voltages applied between the lower electrode and each of the upper electrodes have different voltage levels or RMS (root-mean-square) values. There are a number of ways this can be achieved.

For example, this can be achieved by providing a variable resistor connected in series between the voltage signal and each of the upper electrodes, so that the peak-to-peak voltage level provided to each upper electrode can be varied independently.

Alternatively, in some embodiments, identical voltage signals having the same peak-to-peak voltage, the same period and the same RMS voltage can applied to the lower electrode and one or more of the upper electrodes at the same time, but a variable delay can be added to the signal applied to each of the upper electrodes. In this way, the RMS voltage can be varied anywhere between 0 V when the signals applied to the lower electrode and one of the upper electrodes are exactly in phase and a maximum value when the voltage signals applied to the lower and upper electrodes are exactly 180 degrees out of phase. Such delays can for example be provided by capacitors.

As a further alternative, the RMS voltage of the signal to each of the upper electrodes can be varied by varying the duty cycle of each of these signals, while providing either 0 V or a signal having a constant duty cycle to the lower electrode.

In yet alternative embodiments, each of the upper electrodes are supplied in turn with an AC voltage signal. The voltage signal is varied for each upper electrode so that the required voltage is applied to each upper electrode. The time period during which the upper electrode is not connected to the AC voltage signal is preferably shorter than the response time of the liquid-liquid interface so that there is no undesired movement of the liquid-liquid interface.

In yet alternative embodiments, the signal frequency can be increased or decreased, for example by applying only selected pulses of a reference oscillating signal, resulting in a varied RMS voltage value.

The camera module 1502 further comprises an image sensor 1512 which captures images formed from light rays received via optical device 1504 and fixed lenses 1503.

A processing unit 1514 is provided in the optical apparatus 1500 which is for example a image signal processor or the base band processor, for example of a mobile telephone. Processing unit 1514 implements algorithms for controlling the driving circuitry 1516 to provide the correct voltages to the electrodes of the optical device 1504, as well as controlling image sensor 1512 to capture images. Processing unit 1514 receives captured images from image sensor 1512 and stores them in a memory 1518 and displays them on a display 1520.

A power supply unit 1524 provides supply voltages to the driving circuitry 1516, the image sensor 1512, and the processing unit 1514.

In some embodiments, the optical device 1504 is a lens able to perform variable tilt, and such a function can be used to compensate for any movement of the optical apparatus 1500 as an image is captured, which can cause blurring. In order to detect any movement of the apparatus, a motion sensor 1526 can be provided in some embodiments, connected to the processing unit 1514, or directly to the driving circuitry 1516. Motion sensor 1526 detects any motion, and generates an output signal to control the tilt of the refractive interface of the optical device 1504 in response. The motion sensor 1526 can comprise any suitable means for detecting motion of the apparatus, such as a micro-electro-mechanical system (MEMS) accelerometer.

Thus a number of embodiments of optical devices have been described which comprise two immiscible liquids, one being insulating, and the other being a conducting liquid, these liquids meeting at a liquid-liquid interface. A first electrode is provided in the region of the edge of the interface between the liquids, the first electrode being separated from the liquids by an insulating layer. A plurality of second electrodes is provided in contact with conducting liquid. These electrodes are preferably positioned such that they allow further control of the shape or curvature of the liquid-liquid interface. In particular, one of the second electrodes is positioned closest to a first part of said edge of said liquid-liquid interface and a another of the second electrodes is positioned closest to a second part of an edge of said liquid-liquid interface such that said first and second parts of the edge of said liquid-liquid interface can be controlled independently.

In a variable lens the plurality of second electrodes advantageously allow functions such as variable tilt, variable astigmatism, at the same time as variably focus. For providing tilt, the electrodes are preferably arranged such that two halves of the circumference of the edge of the refractive interface can be controlled differently, while for providing astigmatism, the electrodes are preferably arranged in facing pairs, for example as shown in the examples of the figures. For providing variable focus, the electrodes are preferably provided evenly spaced around lens, equidistant from the edge of the liquid-liquid interface.

By providing a plurality of electrodes in contact with the conductive liquid, the edge of the refractive interface can be controlled with no sharp variations in voltage from one point to the next.

The optical device according to embodiments of the present invention can be a wide range devices including a liquid lens having variable focus, tilt and/or astigmatism, a variable diaphragm, or alternative devices, the advantages of the present invention applying in any device in which electrowetting is to be used to move parts of a liquid-liquid interface independently from each other.

Having thus described at least one illustrative embodiment of the invention, various alterations, modifications and improvements will readily occur to those skilled in the art. Such alterations, modifications and improvements are intended to be within the scope of the invention.

In particular, whilst particular examples of electrodes have been provided, other forms of these electrodes are possible. For example, whilst the lower electrode has been described in the above embodiments as being provided by a base portion of the device, in alternative embodiments a transparent electrode could be provided as a surface layer of the lower window. Furthermore, the plurality of upper electrodes could also be formed of transparent electrodes printed or glued to the underside of the upper window.

Whilst certain embodiments of optical devices have been described comprising different upper electrode arrangements comprising a variety of numbers of electrodes of different shapes and dimensions, in alternative optical device embodiments, any number of any of the described electrodes can be provided.

Any of the planar windows 204, 206, 24, 906, 907, 1304, 1306, could be formed of any suitable transparent material such as glass or plastic, and could be replaced by fixed lenses of a suitable material. In some embodiments one or the other of the upper and lower windows could be provided having a mirrored surface facing into the lens such that the lens acts as a mirror having variable optical characteristics.

The optical device according to embodiments of the invention can be used in all kinds of optical systems, for example where control of the optical power and/or tilt and/or astigmatism and/or correction of optical aberrations are necessary. In particular, embodiments can be used in an ophthalmic tool used by opticians for determining a customer's glass correction.

**Claims**

1. An electrowetting optical device comprising:

   a chamber (207, 1312) comprising first and second immiscible liquids (208, 210, 1314, 1316) contacting each other at a liquid-liquid interface (212, 1316), said first liquid (208) being an insulating liquid and said second liquid (210) being a conducting liquid;
   a first electrode (202, 1308) insulated from said first and second liquids by an insulating layer (222, 1310); and
   a plurality of second electrodes (214, 216, 1318) in contact with said second liquid, wherein said second electrodes are arranged to receive independent voltages for moving different parts of said liquid-liquid interface by electrowetting.

2. The optical device of claim 1, wherein at least one of said plurality of second electrodes comprises a conducting plate and wherein said conducting plate comprises a layer of conducting material deposited on an inner surface of said chamber.

3. The optical device of any preceding claim, wherein an even number of second electrodes are provided arranged in facing pairs around an optical axis of said device.

4. The optical device of any preceding claim, comprising a plurality of conducting segments, only some of said conducting segments being electrically connected to form said second electrodes, said conducting segments being arranged close to each other such that at least part of a voltage applied to one of said second electrodes is also applied to an adjacent conducting segment.

5. The optical device of any preceding claim, wherein said second liquid has a low conductivity of less than 300 $\mu$S/cm.

6. The optical device of any preceding claim, wherein said second liquid has a low conductivity of less than 30 $\mu$S/cm.

7. The optical device of any of preceding claim, wherein said optical device is a liquid diaphragm (1300), said first liquid being opaque and forming an annular drop having an opening, and wherein said plurality of second electrodes are arranged adjacent to said liquid-liquid interface in order to control the dimensions of said opening in said annular drop.

8. The optical device of any of claims 1 to 6, wherein said optical device is a liquid lens comprising a base portion having an opening providing a light path through the lens, said liquid-liquid interface traversing said opening, wherein said first and second liquids have different refractive indices and an edge of said liquid-liquid interface is moveable by electrowetting by application of voltages to one or more of said second electrodes.

9. The optical device of claim 8, wherein said plurality of second electrodes are arranged so as to allow one or more of the following functions:

   variable focus;
   variable tilt;
   variable astigmatism.

10. The optical device of claim 8 or 9, wherein said edge of said refractive interface contacts an annular surface of said chamber such that said edge of said liquid-liquid interface is circular when no voltages are applied to said electrodes.

11. The optical device of any of claims 8 to 10, wherein said edge of said refractive interface contacts a non-annular surface of said chamber such that the edge of said interface is non-circular when no voltage is applied to said electrodes.

12. An optical apparatus comprising:

   an image sensor (1512) for capturing an image;
   a lens arrangement arranged to form an image on said image sensor, the lens arrangement comprising the optical device (1504) of any preceding claim; and
   driving circuitry (1516) for generating voltage signals applied between said first electrode and each of said plurality of second electrodes.

13. The optical apparatus of claim 12, wherein the liquid-liquid interface of said optical device is a liquid lens controllable to have variable tilt, and wherein said optical apparatus further comprises a motion sensor (1526) arranged to generate a control signal based on motion of said optical apparatus, said liquid-liquid interface being controlled based on said control signal.

14. The optical apparatus of claim 12 or 13, wherein said driving circuitry is arranged to generate a first oscillating voltage of a first frequency to be applied between said first electrode and a first one of said plurality of second electrodes, and to generate a second oscillating voltage of a second frequency different from said first frequency to be applied between said first electrode and a second one of said plurality of second electrodes.

15. A method of controlling a liquid lens, comprising first and second immiscible liquids (208, 210, 1314, 1316), said first liquid being an insulating liquid and said second liquid being a conducting liquid, said first and second liquids contacting each other to form a liquid-liquid interface (212), said method comprising:

applying a first voltage signal between a first electrode insulated from said first and second liquids by an insulating layer and a selected one of a plurality of second electrodes in contact with said conductive liquid, a part of the edge (225) of said liquid-liquid interface being moved by electrowetting by said applied first voltage.

16. The method of claim 15, wherein said first voltage signal is an oscillating signal at a first frequency chosen such that the apparent voltage at different points of the edge of said liquid-liquid interface are different.

17. The method of claims 15 or 16, further comprising applying a second voltage signal between said first electrode and a second one of said plurality of second electrodes, said first and second voltage signals being oscillating voltages having different frequencies of oscillation and different root-mean-square voltage values.

Fig 1 (PRIOR ART)

Fig 2A

Fig 2B

Fig 3

Fig 4

Fig 5

Fig 6

Fig 7

Fig 8

Fig 9

Fig 10

Fig 11

Fig 12

Fig 13

1400

1418

1416

1414

1402

1412

1404

1410

1406

1408

**Fig 14**

1500

1502

1508  1506  Δ  1504  1510

1516

1503

1524

1516

DRIVING
CIRCUITRY

POWER
SUPPLY

PROCESSING
UNIT

IMAGE
SENSOR

1512

1514

MOTION
SENSOR

IMAGE
DISPLAY

1520

MEMORY

1526

1518

**Fig 15**

**European Patent Office**

# EUROPEAN SEARCH REPORT

Application Number

EP 06 30 1000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 012247 A (SONY CORP) 12 January 2006 (2006-01-12)<br><br>& PAJ abstract<br>* paragraph [0028] - paragraph [0030]; figures 2,5 *<br>----- | 1-3, 5-11, 14-17 | INV.<br>G02B3/14<br>G02B26/02 |
| Y | EP 1 662 276 A (VARIOPTIC [FR]) 31 May 2006 (2006-05-31)<br>* figure 4 *<br>* column 4, line 16 - line 19 *<br>* paragraph [0021] *<br>----- | 1-3,5,6, 8-17 | |
| Y | US 2004/227063 A1 (VIINIKANOJA JARKKO [FI]) 18 November 2004 (2004-11-18)<br>* paragraph [0076]; figure 3 *<br>* paragraph [0080] *<br>----- | 1-3,5,6, 8-17 | |
| Y | WO 2006/092804 A (VISIONIX LTD [IL]; ABITBOL MARC [IL]; HERMAN HAGGAI [IL]) 8 September 2006 (2006-09-08)<br>* page 16; figure 4 *<br>----- | 1-3,5,6, 8-17 | |
| Y | JP 2002 169005 A (CANON KK) 14 June 2002 (2002-06-14)<br>& PAJ abstract<br>----- | 1-3,5,6, 8-17 | TECHNICAL FIELDS SEARCHED (IPC)<br>G02B |
| X | WO 2006/048187 A (EASTMAN KODAK CO [US]; WEBER ETIENNE NICOLAS [FR]; TOUCHARD NICOLAS PA) 11 May 2006 (2006-05-11)<br>* page 9, line 16; figure 2 *<br>----- | 1-3,5,6, 8-10,15 | |
| A | WO 2004/049927 A (KONINKL PHILIPS ELECTRONICS NV [NL]; KUIPER STEIN [NL]; WOLTERINK EDWI) 17 June 2004 (2004-06-17)<br>* page 7, line 14 - page 8, line 8; figures 5a-5c *<br>----- | 1,3,9-11 | |
| | -/-- | | |

~~The present search report has been drawn up for all claims~~

| Place of search | Date of completion of the search | Examiner |
|---|---|---|
| Berlin | 23 February 2007 | Ciarrocca, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

EP 1 906 213 A1

**European Patent Office**

**EUROPEAN SEARCH REPORT**

Application Number

EP 06 30 1000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2006 064949 A (FUJI PHOTO FILM CO LTD; FUJINON CORP) 9 March 2006 (2006-03-09) & PAJ abstract* figure 7 *<br>----- | 1,3,11 | |

TECHNICAL FIELDS SEARCHED (IPC)

~~The present search report has been drawn up for all claims~~

| Place of search | Date of completion of the search | Examiner |
|---|---|---|
| Berlin | 23 February 2007 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 06 30 1000

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 8-17

**European Patent Office**

**LACK OF UNITY OF INVENTION**
**SHEET B**

Application Number

EP 06 30 1000

The Search Division considers that the present European patent application does not comply with the requirements of unity of invention and relates to several inventions or groups of inventions, namely:

1. claims: 1-6,8-17

    Electrowetting device with an electrode formed of a plurality of conducting segments such that at least a part of a voltage applied to one of the segments is also applied to an adjacent segment.
    ---

2. claim: Claim 7

    Electrowetting diaphragm with an annular opaque liquid with an opening
    ---

**ANNEX TO THE EUROPEAN SEARCH REPORT
ON EUROPEAN PATENT APPLICATION NO.**

EP 06 30 1000

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2007

| Patent document cited in search report | | Publication date | Patent family member(s) | | Publication date |
|---|---|---|---|---|---|
| JP 2006012247 | A | 12-01-2006 | NONE | | |
| EP 1662276 | A | 31-05-2006 | CN | 1782746 A | 07-06-2006 |
| | | | FR | 2878338 A1 | 26-05-2006 |
| | | | JP | 2006146235 A | 08-06-2006 |
| | | | KR | 20060058020 A | 29-05-2006 |
| | | | US | 2006126190 A1 | 15-06-2006 |
| US 2004227063 | A1 | 18-11-2004 | NONE | | |
| WO 2006092804 | A | 08-09-2006 | NONE | | |
| JP 2002169005 | A | 14-06-2002 | NONE | | |
| WO 2006048187 | A | 11-05-2006 | FR | 2877734 A1 | 12-05-2006 |
| WO 2004049927 | A | 17-06-2004 | AU | 2003283634 A1 | 23-06-2004 |
| | | | CN | 1719998 A | 11-01-2006 |
| | | | JP | 2006508730 T | 16-03-2006 |
| | | | KR | 20050085283 A | 29-08-2005 |
| | | | US | 2006170864 A1 | 03-08-2006 |
| JP 2006064949 | A | 09-03-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1662276 A
- US 6538823 B
- EP 06115595 A